# EUROPÄISCHE PATENTSCHRIFT

(11) **EP 2 606 981 B1**
(45) Veröffentlichungstag und Bekanntmachung des Hinweises auf die Patenterteilung: **30.04.2014**
(21) Anmeldenummer: 11194633.1
(22) Anmeldetag: 20.12.2011
(51) Int. Cl.: B05B 12/14, B05B 15/02

(54) **Farbwechslermodul und Farbwechsler**
Colour change module and colour changer
Module de changement de teinte et changeur de teinte

(43) Veröffentlichungstag der Anmeldung: 26.06.2013
(73) Patentinhaber: ABB Technology AG, 8050 Zürich (CH)
(72) Erfinder: Krogedal, Arnulf, 4322 Sandnes (NO); Larsen, Ole-Morten, 4056 Tananger (NO)
(74) Vertreter: Kock, Ina

(56) Entgegenhaltungen:
- WO-A2-98/39101
- GB-A- 2 307 195

## Beschreibung

Die Erfindung betrifft ein Farbwechslermodul, umfassend einen Einlasskanal, einen Auslasskanal, einen strömungstechnisch dazwischen angeordneten Durchlasskanal und ein erstes Ventilmittel zur Unterbrechung des Durchlasskanals. Die Erfindung betrifft auch einen Farbwechsler.

Es ist allgemein bekannt, dass in industriellen Lackieranlagen eine Vielzahl von verschiedenen Farbtönen zum Einsatz kommt, beispielsweise in Lackieranlagen für Automobilkarosserien oder Anbauteile. Derartige Lackieranlagen sind zumeist roboterbasiert und bei typischen Taktzeiten von 60s bis 90s dafür ausgelegt, in jedem Taktzyklus einen anderen Farbton zu lackieren, wobei 20 bis 60 verschiedene Farbtöne in der Automobilindustrie eine gängige Anzahl ist. Um beispielsweise einen jeweils an einem Roboterarm angebrachten Zerstäuber mit einem Lackmaterial des gewünschten Farbtons zu versorgen sind zumeist Farbwechsler vorgesehen. Diese weisen eine Vielzahl an Eingängen für Lackmaterial auf, welche mit entsprechenden Versorgungsleitungen für die verschiedenen Lackmaterialien verbunden sind. Die Lackmaterialien werden in der Regel mittels sogenannter Ringleitungen an verschiedenen Abnahmestellen längs der Lackieranlage zur Verfügung gestellt und von dort mittels der Versorgungsleitungen zum jeweiligen Farbwechsler geführt. Ein Farbwechsler weist zudem einen gemeinsamen Sammelkanal auf, in welchen die Versorgungsleitungen zumindest indirekt münden, wobei dessen Ausgang über eine Leitung mit dem mit Lackmaterial zu versorgenden Zerstäuber verbunden ist.

Zwischen den jeweiligen Eingängen des Farbwechslers und dem gemeinsamen Sammelkanal sind Ventilmittel vorgesehen. Je nachdem, welches der Ventilmittel geöffnet ist, wird beim Lackierbetrieb das entsprechende Lackmaterial in den Sammelkanal eingeführt und von dort an den Zerstäuber weitergeleitet. Wenigstens ein Eingang eines Farbwechsler ist üblicherweise über ein Ventilmittel mit einer Lösemittelleitung verbunden, um im Falle eines Farbwechsels den Sammelkanal für das nächste Lackmaterial mit anderem Farbton zu reinigen. Häufig kommt bei einer Reinigung auch ein Einspeisen eines Luft- Lösemittelgemisches zum Einsatz, welches durch abwechselndes, gepulstes Einspeisen von Luft und Lösemittel erzeugt wird. Die Reinigungswirkung eines solchen Gemisches ist bei verringertem Lösemittelverbrauch deutlich erhöht.

Die strikte Trennung von verschiedenen Farbtönen ist von höchster Bedeutung, weil bereits geringste Farbrückstände zu einer Verfälschung des Farbtons kommen können, beispielsweise bei einem marginalen Rückstand eines roten Farbtons in einem weißen Farbton. Ventilmittel unterliegen einem Verschleiß und es können somit im Laufe der Zeit auch Leckagen auftreten. Wenn ein Ventilmittel nicht mehr zuverlässig schließt, so können trotz eigentlich geschlossenem Zustand eines Ventilmittels marginale Mengen eines Lackmaterials eines ersten Farbtons in den Sammelkanal gelangen und sich mit einem darin befindlichen Lackmaterial eines anderen Farbtons vermischen.

Derartige Leckagefehler können einem Farbwechsler von außen nicht angesehen werden. Daher werden diese zumeist auch erst sehr spät entdeckt, nämlich beispielsweise auf einer signifikant fehlerhaft lackierten Karosserie. Je nach Kombination der aufeinander folgenden Farbtöne können derartige Fehler auch erst nach Tagen anhand einer fehlerhaft lackierten Karosserie entdeckt werden. Der durch fehlerhaft lackierte Karosserien entstandene Schaden ist erheblich, weil diese komplett aufgearbeitet und neu lackiert werden müssen. Da in einer Lackierstrasse zumeist eine Vielzahl an Lackierrobotern sequentiell an der Lackierung ein und desselben Objektes beteiligt ist, erweist sich eine Zuordnung einer fehlerhaften Lackierung zu einem bestimmten Lackierroboter beziehungsweise dem diesen zugehörigen Farbwechsler zumeist als sehr schwierig bis unmöglich. Daher ist eine Lackieranlage bei Vorhandensein eines defekten Lackwechslers zumeist für den Zeitraum einer Fehlersuche stillzulegen, wodurch deren Produktionskapazität in nachteiliger Weise reduziert wird.

Herkömmliche Farbwechsler sind bekannt aus WO 98/39101 A2 sowie GB2307195 A.

Ausgehend von diesem Stand der Technik ist es Aufgabe der Erfindung, einen Farbwechslermodul beziehungsweise einen Farbwechsler anzugeben, welche sich durch eine besonders hohe Zuverlässigkeit bezüglich der Vermeidung einer möglichen Farbverschleppung auszeichnen.

Diese Aufgabe wird gelöst durch ein Farbwechslermodul der eingangs genannten Art. Dieses ist dadurch gekennzeichnet, dass ein strömungstechnisch in Reihe mit dem ersten Ventilmittel liegendes Andockventil vorgesehen ist, mit welchem der Durchlasskanal ebenfalls unterbrechbar ist.

Die Grundidee der Erfindung besteht einerseits darin, eine erhöhte Leckagesicherheit des Durchlasskanals durch die strömungstechnische Reihenschaltung von mehreren Ventilmitteln zu erreichen. Die Wahrscheinlichkeit, dass zwei in Reihe geschaltete Ventilmittel gleichzeitig eine Leckage aufweisen, ist grundsätzlich reduziert. Durch die Verwendung eines Andockventils als zusätzliches Schaltmittel ist zudem eine absolut sichere Unterbrechung des Durchlasskanals ermöglicht. Bei einem Andockventil ist das Auftreten einer Leckage durch den Durchlasskanal physikalisch unmöglich. Ein Andockventil weist zwei Kupplungsstücke auf, welche im Unterbrechungsfall mechanisch voneinander wegbewegt und damit getrennt sind. Jedes der beiden Kupplungsstücke weist einen eigenen ventilähnlichen Schließmechanismus auf.

Sollte eines der beiden Kupplungsstücke einen defekten Schließmechanismus beziehungsweise eine Leckage aufweisen, so führt dies einerseits aufgrund von deren mechanischer Trennung zu keiner Farbverschleppung, weil das dann austretende Lackmaterial aus dem fehlerhaften Kupplungsstücken tropft, aber nicht in das gegenüber liegende Kupplungsstück gelangt. Andererseits ist eine eventuelle Leckage aufgrund des Austritts des Lackmaterials sicher und schnell optisch zu detektieren. Der modulare Aufbau eines erfindungsgemäßen Farbwechslermoduls ermöglicht durch entsprechende Aneinanderreihung baugleicher oder bauähnlicher Module eine Anpassung eines daraus zu bildenden Farbwechslers an die betrieblichen Anforderungen, insbesondere an die Zahl der zu schaltenden Farbtöne.

Ein erfindungsgemäßes Farbwechslermodul zeichnet sich daher durch einen besonders sicher verschließbaren Durchlasskanal auf, wobei eine eventuelle Fehlfunktion eines der Ventilmittel sehr leicht optisch zu entdecken ist und zudem zu keiner Farbverschleppung führt.

Gemäß einer besonders bevorzugten Ausgestaltungsform des erfindungsgemäßen Farbwechslermodul weist das Andockventil einen ersten den Einlasskanal umfassenden Ventilteil und einen zweiten darauf angepassten Ventilteil auf, wobei wenigstens der erste Ventilteil beweglich ist, so dass durch eine jeweilige Kupplungsbewegung beide Ventilteile an jeweiligen Kupplungsflächen hermetisch miteinander koppelbar oder komplett voneinander trennbar sind. Jeder der beiden Ventilteile weist einen ventilähnlichen Schließmechanismus auf, der im geöffneten Zustand das jeweilige Ende des dann unterbrochenen Durchlasskanals sicher verschließt. Durch das mechanische Auseinanderbewegen der Ventilteile, beispielsweise um einige Millimeter, ist es ausgeschlossen, dass im Falle eines defekten ventilähnlichen Schaltmittels Lackmaterial durch den Durchlasskanal gelangen kann.

Vorzugsweise ist als Kupplungsbewegung eine Linearbewegung überwiegend senkrecht zu den jeweiligen Kupplungsflächen vorgesehen. Die Kupplungsflächen weisen zur Gewährleistung einer hermetisch dichten Verbindung im geschlossenen Zustand Dichtvorrichtungen beziehungsweise Dichtringe auf, welche üblicherweise einen Pressdruck erfordern. Durch eine Linearbewegung senkrecht zur Kupplungsfläche ist ein solcher Druck besonders einfach erzeugbar wobei in vorteilhafter Weise eine Reibbewegung der Kupplungsflächen vermieden ist, welche zu einem erhöhten Verschleiß führen würde.

Gemäß einer weiteren Ausgestaltungsform des erfindungsgemäßen Farbwechslermoduls ist der erste bewegliche Ventilteil dafür vorgesehen, daran eine zumindest indirekt in den Einlasskanal mündende flexible Lackversorgungsleitung anzuschließen. Durch den Anschluss einer flexiblen Lackversorgungsleitung ist nämlich eine Kupplungsbewegung des ersten Ventilteils in vorteilhafter Weise durch eine entsprechende Bewegung der flexiblen Lackversorgungsleitung einfach ausgeglichen, ohne dass zusätzliche mechanische Schleif- oder Rutschverbindungen notwendig wären.

Entsprechend einer weiteren erfindungsgemäßen Ausführungsform des erfindungsgemäßen Farbwechslermoduls ist der erste bewegliche Ventilteil auch dafür vorgesehen, daran eine zumindest indirekt in den Einlasskanal mündende flexible Rückführungsleitung anzuschließen, so dass zumindest bei geschlossenem Andockventil ein Materialumlauf von der Lackversorgungsleitung in die Rückführungsleitung ermöglicht ist. Eine kontinuierliche Zirkulation des Lackmaterials ist zur Vermeidung einer Sedimentierung von Farbpigmenten von großem Vorteil, insbesondere bei Lackmaterialien einer Sonderfarbe, welche beispielsweise nur wenige Male pro Tag zum Einsatz kommen. Auch die flexible Rückführungsleitung gleicht in vorteilhafter Weise eine Kupplungsbewegung des ersten Ventilteils aus.

Gemäß einer weiteren Ausführungsform des erfindungsgemäßen Farbwechslermoduls ist ein zweites Ventilmittel zur Einspeisung von Luft und/oder eines Reinigungsfluids, beispielsweise einem Lösemittel, in den Durchlasskanal vorgesehen. Dies ermöglicht die Reinigung des Auslasskanals und von Teilen des Durchlasskanals, so dass in einem aus mehreren Farbwechslermodulen zusammen gesetzten Farbwechsler ein Farbwechsel sicher durchgeführt werden kann.

Einer weiteren Erfindungsvariante folgend weist das Farbwechslermodul einen zentralen Rückführungskanal auf und es ist ein drittes Ventilmittel dafür vorgesehen, den Durchlasskanal mit dem zentralen Rückführungskanal zu verbinden. Ein solcher zentraler Rückführungskanal wird auch 'Dump' genannt und dient dem strömungstechnischen Rückschluss des Durchlasskanals in einen Sammelbehälter oder dergleichen kurz vor seiner Einmündung in den Auslasskanal. Somit lässt sich beispielsweise ein Lackmaterial mit einem neuen Farbton in ein Farbwechslermodul eines Farbwechslers andrücken, während über ein weiteres Farbwechslermodul desselben Farbwechslers noch Lackmaterial für eine Lackierung fließt. Ein derartiger Farbwechsel kommt beispielsweise bei sehr selten verwendeten Sonderfarben vor. Gemäß einer besonders bevorzugten Variante des Farbwechslermoduls ist dieses scheibenähnlich ausgestaltet, wobei mehrere gleichartige oder zumindest ähnliche Farbwechslermodule aneinander reihbar sind und wobei dann ein sich quer über die aneinandergereihten Farbwechslermodule erstreckender durchgehender Auslasskanal und gegebenenfalls ein durchgehender zentraler Rückführungskanal gebildet ist. Ein derartiger modularer Aufbau ermöglicht ein bedarfsgerechtes und flexibles Konstruieren eines Farbwechslers aus mehreren Einzelmodulen.

Die Aufgabe wird auch gelöst durch einen Farbwechsler, umfassend mehrere aneinandergereihte erfindungsgemäße Farbwechslermodule. Die grundsätzlichen Vorteile eines derartigen Farbwechslers wurden bereits zuvor für das erfindungsgemäße Farbwechslermodul erläutert. Die Anzahl der jeweiligen Farbwechslermodule beziehungsweise der durch diese gebildeten Durchlasskanäle beträgt beispielsweise 5 bis 60, je nach Anwendungsfall.

Entsprechend einer besonders bevorzugten Ausgestaltungsform des erfindungsgemäßen Farbwechslers ist eine Verriegelung oder ein Verriegelungsmechanismus vorgesehen, durch welchen die jeweiligen Andockventile gegeneinander verriegelt sind. Eine Verriegelung bedeutet, dass es mechanisch ausgeschlossen ist, mehr als genau ein Andockventil in den geschlossenen Zustand, also mit jeweils durchgeschaltetem Durchlasskanal, zu versetzen. Hierdurch ist eine Farbvermischung durch eine Fehlansteuerung der Andockventile ausgeschlossen, wodurch die Betriebssicherheit des Farbwechslers in vorteilhafter Weise weiter verbessert ist. Erfindungsgemäß sind die Verriegelung oder der Verriegelungsmechanismus mechanisch, mechanisch-pneumatisch, elektrisch und/oder durch eine Programmsteuerung realisiert. Vorzugsweise ist daher auch ein jeweiliger Ansteuermechanismus derart auszugestalten, dass das gleichzeitige Schließen von mehreren Andockventilen steuerungstechnisch nicht möglich ist.

Gemäß einer ebenfalls bevorzugten Ausgestaltung des erfindungsgemäßen Farbwechslers weist der bewegliche erste Ventilteil der jeweiligen Andockventile eine Vertiefung auf, gegenüber welcher ein jeweiliger Verriegelungskanal mündet und wobei ein jeweiliges Kontaktmittel vorgesehen ist, welches beim Öffnen des jeweiligen Andockventils aus der Vertiefung in den jeweiligen Verriegelungskanal gedrückt wird, so dass das freie Innenvolumen des jeweiligen Verriegelungskanals um ein Schaltvolumen reduziert wird, wobei die jeweiligen Verriegelungskanäle an ihrem jeweiligen anderen Ende in einen gemeinsamen sich über alle Farbwechselmodule erstreckenden geschlossenen zentralen Verriegelungskanal erstrecken. Entsprechend einer weiteren Ausgestaltungsform des Farbwechslers sind die geschlossenen und miteinander verbundenen Verriegelungskanäle mit einem druckbelastbaren Medium gefüllt sind, welches alle Verriegelungskanäle bei geschlossenen Andockventilen abzüglich genau eines Schaltvolumens ausfüllt.

Der Gedanke eines derartigen Verriegelungsmechanismus besteht darin, ein geschlossenes System von miteinander verbundenen Verriegelungskanälen zur Verfügung zu stellen, welches nahezu komplett mit einem druckbelastbaren Medium gefüllt ist. Hinter jedem gegeneinander zu verriegelndem Andockventil mündet ein Verriegelungskanal. Für den Fall, dass alle Andockventile geöffnet sind, wird bei Schließen eines ersten Andockventils das jeweilige Kontaktmittel aus der Vertiefung in das System der Verriegelungskanäle gedrückt, so dass das Innenvolumen der Verriegelungskanäle entsprechend um ein entsprechendes Schaltvolumen verringert wird. Das druckbelastbare Medium ist derart bemessen, dass es genau ein Schaltvolumen weniger aufweist, als das gesamte Kanalvolumen.

Daher ist ein Hereindrücken eines jeweils ersten Kontaktmittels möglich. Jedes Hereindrücken eines weiteren Kontaktmittels ist aufgrund des in diesem Fall dann komplett mit einem druckbelastbaren Medium gefüllten Verriegelungskanalsystems nunmehr nicht mehr möglich. Die Anordnung eines Kontaktmittels, welches mechanisch in eine Vertiefung des beweglichen ersten Teils des jeweiligen Andockventils eingreift, ist derart ausgestaltet, dass bei eingegriffenem Kontaktmittel eine Bewegung des jeweiligen ersten Ventilteils des Andockventils unmöglich ist. Auf diese Weise ist in vorteilhafter Weise erreicht, dass eine Kupplungsbewegung für alle weiteren Andockventile mechanisch ausgeschlossen ist, sofern ein erstes Andockventil geschlossen ist. Wenn das jeweils geschlossene Andockventil geöffnet wird, steht wieder ein komprimierbares Innenvolumen im Inneren des Verriegelungskanalsystems zur Verfügung, so dass genau eines der Andockventil geschlossen werden kann. Ein geeignetes Kontaktmittel ist beispielsweise eine Kugel des Innendurchmessers des jeweiligen Verriegelungskanals. Diese ist beispielsweise aus einem Metall oder einem sonstigen harten Material gefertigt. Die Vertiefung ist in ihrem Querschnitt auf den Aussendruchmesser der Kugel angepasst und beispielsweise als umlaufende Nut mit halbkreisförmigem Querschnitt ausgestaltet.

Gemäß einer weiteren Ausführungsvariante des Farbwechslers ist das druckbelastbare Medium durch Kugeln gebildet, welche vorzugsweise in ihrem Durchmesser auf den Durchmesser der Verriegelungskanäle angepasst sind. Derartige Kugeln weisen eine fließähnliche Eigenschaft auf und sind in höchstem Maße druckbelastbar und können gleichzeitig als jeweiliges Kontaktmittel dienen. Hierdurch ist ein einfacher und zuverlässiger Aufbau eines entsprechenden Verriegelungsmechanismus realisiert.

Es ist aber ebenso eine Variante eines erfindungsgemäßen Farbwechslers, dass das druckbelastbare Medium durch eine Hydraulikflüssigkeit gebildet ist. Hierbei sind die Verriegelungskanäle jeweils hermetisch dicht auszugestalten, ebenso wie die Verriegelungsmittel an den jeweiligen den ersten Ventilteilen der Andockventile gegenüber liegend mündenden Verriegelungskanälen.

Es ist aber auch erfindungsgemäß vorgesehen, als druckbelastbares Medium eine oder mehrere Stangen oder dergleichen zu verwenden. Diese wirken in einer speziellen Ausgestaltung der Erfindung dann ähnlich den Hebelmechanismus eines Schließzylinders eines Schlosses ineinander, so dass hierdurch ebenfalls eine Verriegelung gewährleistet ist.

Gemäß einer besonders bevorzugten Ausgestaltungsform des erfindungsgemäßen Farbwechslers sind zumindest einige der Farbwechslermodule in einem modulübergreifenden Gehäusekörper angeordnet. So ist es erfindungsgemäß auch vorgesehen, beispielsweise Farbwechslermodule mit jeweils zwei schaltbaren Durchlasskanälen beiderseits des gemeinsamen Auslasskanals gegenüberliegend in einem gemeinsamen Ventilkörper, beispielsweise aus einem gefrästen Metall, anzuordnen. Aber auch Untergruppen von beispielsweise 4, 5 oder 6 in einem gemeinsamen Ventilkörper oder Ventilgehäuse angeordneten Farbwechslermodulen sind denkbar. Die Fertigung eines erfindungsgemäßen Farbwechslers wird dadurch vereinfacht. Aber auch die komplette Anordnung von beispielsweise 30 Farbwechslermodulen in einem gemeinsamen Ventilgehäuse, welches auch den durchgehenden Farbauslasskanal, eine gemeinsame Rücklaufleitung und/oder zumindest einige der Verriegelungskanäle die beinhaltet, ist denkbar.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein erstes exemplarisches Farbwechslermodul,
- Fig. 2: einen ersten exemplarischen Farbwechsler sowie
- Fig. 3: einen zweiten exemplarischen Farbwechsler.

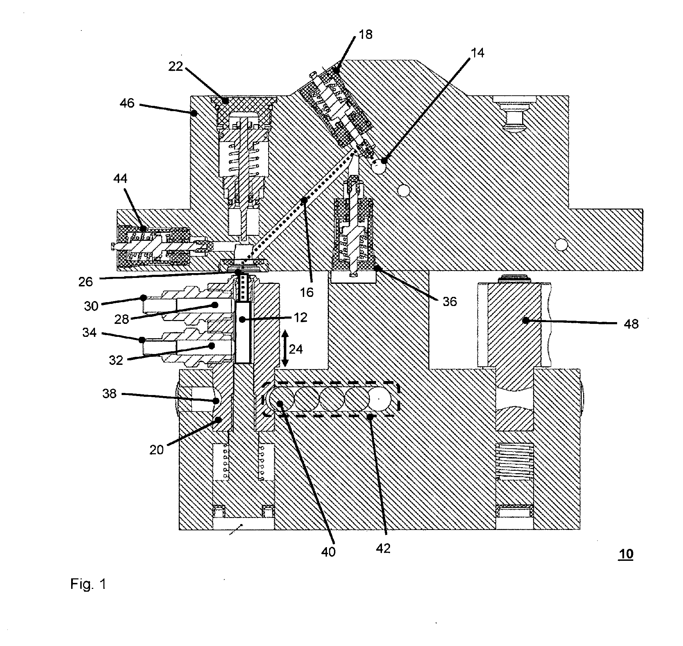

Fig. 1 zeigt ein erstes exemplarisches Farbwechslermodul 10 in einer Schnittansicht. In einem Ventilkörper 46, welcher beispielsweise aus einem Metall gefräst ist, ist als sich durch das Gehäuse 46 erstreckende Querbohrung ein Auslasskanal 14 gebildet, in welchen ein Durchlasskanal 16 mündet, wie mit einer entsprechenden gestrichelten Linie angedeutet ist. An seinem anderen Ende mündet der Durchlasskanal 16 in einen Einlasskanal 12, welcher beispielhaft in einen ersten Ventilteil 20 eines Andockventils integriert ist. Der erste Ventilteil 20 des Andockventils ist in Richtung des Pfeils mit der Bezugsziffer 24 auf- und abbewegbar, so dass eine Kupplungsbewegung mit einem zweiten Ventilteil 22 des Andockventils durchführbar ist. Jeder der beiden Ventilteile 20, 22 verfügt über einen ventilähnlichen Schließmechanismus, so dass bei geöffnetem Andockventil die beiden Ventilteile 20, 22 hermetisch verschlossen sind.

Auf diese Weise ist der Durchlasskanal 16 bei geöffnetem Andockventil (20+22) sicher unterbrochen, selbst wenn eine Leckage eines ventilähnlichen Schließmechanismus einer der beiden Ventilteile 20, 22 vorliegen sollte. Bei geschlossenem Andockventil 20+22 sind die beiden Ventilteile an einer gemeinsamen Kontaktfläche 26 derart miteinander verbunden, dass ein Lackmaterialfluss durch die dann gekoppelten Ventilteile 20, 22 ermöglicht ist.

Der Durchlasskanal 16 ist fernerhin durch ein erstes Ventilmittel 18, einem druckluftbetriebenen Standardventil, unterbrechbar, welches direkt an dem Auslasskanal 14 angeordnet ist. In den Durchlasskanal 16 mündet fernerhin ein von einem zweiten Ventilmittel 44 verschließbarer Kanal, welcher dafür vorgesehen ist, ein Luft- Lösemittelgemisch zu Reinigungszwecken in den Durchlasskanal 16 einzuspeisen. Ein drittes Ventilmittel 36 ist dafür vorgesehen, eine Verbindung von dem Durchlasskanal zu einem nicht gezeigten zentralen Rückführkanal herzustellen.

In den Einlasskanal 12, welcher zusammen mit dem ersten Ventilteil 20 des Andockventils auf- und abbewegbar ist, münden ein Verbindungsstück 28 für eine Lackversorgungsleitung 30 und ein Verbindungsstück 32 für eine Rückführleitung 34. Durch die flexible Ausführung der Leitungen 30, 34 ist eine Kupplungsbewegung des ersten Ventilteils 20 in vorteilhafter Weise ohne zusätzlichen mechanischen Aufwand kompensiert.

Im unteren Bereich des beweglichen ersten Ventilteils 20 des Andockventils ist eine umlaufende Vertiefung 38 mit halbkreisähnlichem Querschnitt vorgesehen, hinter welcher en erster Verriegelungskanal 42 mündet, welcher Teil eines Verriegelungsmechanismus ist, durch welchen mechanisch ausgeschlossen ist, dass in einem Farbwechsler mit mehreren Farbwechslermodulen mehr als ein Andockventil gleichzeitig geschaltet werden kann. In dem Verriegelungskanal 42 sind in aneinandergrenzender Abfolge mehrere Metallkugeln mit angepasstem Durchmesser vorgesehen, wobei die der Vertiefung 38 nächstliegende Kugel als Kontaktmittel 40 dient. Bei einer Kupplungsbewegung des ersten Ventilteils 20 nach oben wird, sofern sich die nachfolgenden Kugeln in den hinteren Bereich des Verriegelungskanal 42 verschieben lassen, das Kontaktmittel 40 in den Verriegelungskanal 42 gedrückt und es kann eine Aufwärtsbewegung des Ventilteils 20 erfolgen.

Für den Fall, dass bereits ein anderes Andockventil des Farbwechslers geschlossen ist, lassen sich die Kugeln nicht in das Innere des Verriegelungskanals 42 schieben und das Kontaktmittel blockiert eine aufwärts gerichtete Kupplungsbewegung des ersten Ventilteils. Die Andockventile des Farbwechslers sind damit in vorteilhafter Weise gegeneinander verriegelt und dessen Betriebssicherheit weiter erhöht. Mit der Bezugsziffer 48 ist ein versetzt gegenüber angeordnetes Andockventil eines weiteren Farbwechselmoduls angeordnet, welches in demselben Gehäusekörper 46 angeordnet ist.

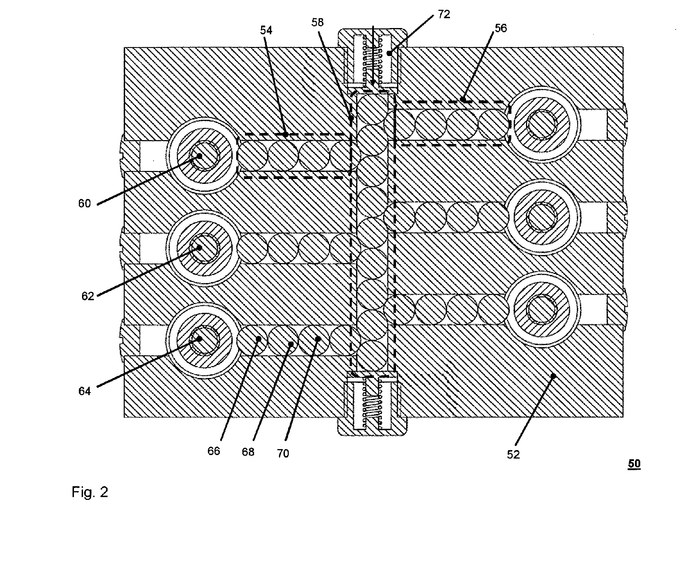

Fig. 2 zeigt einen ersten exemplarischen Farbwechsler 50 in einer Schnittansicht. Der Farbwechsler ist in einem modulübergreifenden Gehäusekörper 52, angeordnet, welcher beispielsweise aus einem Metallblock gefräst ist. Von einem zentralen Verriegelungskanal 58 gehen seitlich mehrere Verriegelungskanäle 54, 56 ab, welche gegenüber eines jeweiligen ersten beweglichen Ventilteils von mehreren jeweiligen Andockventilen 60, 62, 64 münden. Die Verriegelungskanäle 54, 56, 58 sind mit einer Vielzahl an Kugeln 66, 68, 70 gefüllt, deren Außendurchmesser an den Kanalinnendurchmesser angepasst ist. Die jeweils an den äußeren Kanalenden gegenüber den Andockventilen beweglich angeordneten Kugeln 66 dienen als Kontaktmittel, welche bei einer schließenden Kupplungsbewegung des jeweiligen ersten Ventilteils eines der Andockventile 60, 62, 64 aus einer jeweiligen Vertiefung in das System der verbundenen Verriegelungskanäle 54, 56, 58 gedrückt wird. An den axialen Enden des zentralen Verriegelungskanals 58 sind jeweilige Federelemente 72 vorgesehen, welche eine Volumenvergrößerung des Systems der Verriegelungskanäle 54, 56, 58 genau um ein Schaltvolumen zulassen, also genau das Volumen, um das ein Kontaktmittel bei Betätigung des Andockventils in den jeweiligen Verriegelungskanal 54, 56 gedrückt wird. Eine Kupplungsbewegung eines der weiteren Andockventile ist in diesem Zustand durch die in die jeweilige Vertiefung eingreifenden Kontaktmittel 66 unterbunden. Somit ist gewährleistet, dass zu einem Zeitpunkt maximal genau ein Andockventil 66, 68, 70 geschlossen werden kann und die Andockventile 66, 68, 70 somit gegeneinander verriegelt sind.

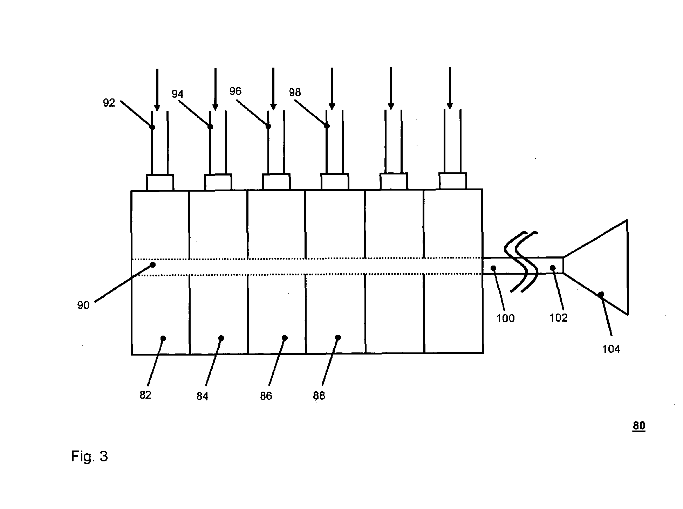

Fig. 3 zeigt einen zweiten exemplarischen Farbwechsler mit einem damit verbundenem Zerstäuber 104 in einer schematischen Zeichnung 80. Der Farbwechsler weist eine Vielzahl an gleichartigen scheibenähnlichen erfindungsgemäßen Farbwechslermodulen 82, 84, 86, 88 auf, in welche jeweilige Lackversorgungsleitungen 92, 94, 96, 98 münden. Jedes der Farbwechslermodule 82, 84, 86, 88 weist einen mittels eines nicht gezeigten Andockventils schaltbaren Durchlasskanal auf, welcher jeweils in einen gemeinsamen Auslasskanal 90 mündet. Dieser ist seinerseits über mehrere Leitungen 100, 102 mit einem Zerstäuber 104, beispielsweise einem rotations- oder Luftzerstäuber, verbunden.

### Bezugszeichenliste

- 10: erstes exemplarisches Farbwechslermodul
- 12: Einlasskanal
- 14: Auslasskanal
- 16: Durchlasskanal
- 18: erstes Ventilmittel
- 20: erster Ventilteil des Andockventils
- 22: zweiter Ventilteil des Andockventils
- 24: Bewegungsrichtung von erstem Ventilteil
- 26: Kupplungsflächen
- 28: Verbindungsstück zu Lackversorgungsleitung
- 30: Lackversorgungsleitung
- 32: Verbindungsstück zu Rückführungsleitung
- 34: Rückführungsleitung
- 36: drittes Ventilmittel
- 38: Vertiefung im ersten Ventilteil des Andockventils
- 40: Kontaktmittel
- 42: erster Verriegelungskanal
- 44: zweites Ventilmittel
- 46: Gehäusekörper
- 48: versetzt gegenüber angeordnetes Andockventilteil
- 50: erster exemplarischer Farbwechsler
- 52: modulübergreifender Gehäusekörper
- 54: zweiter Verriegelungskanal
- 56: dritter Verriegelungskanal
- 58: zentraler Verriegelungskanal
- 60: erstes Andockventil von Farbwechsler
- 62: zweites Andockventil von Farbwechsler
- 64: drittes Andockventil von Farbwechsler
- 66: erste Kugel / Kontaktmittel
- 68: zweite Kugel
- 70: dritte Kugel
- 72: Federelement
- 80: zweiter exemplarischer Farbwechsler
- 82: erstes Farbwechslermodul von Farbwechsler
- 84: zweites Farbwechslermodul von Farbwechsler
- 86: drittes Farbwechslermodul von Farbwechsler
- 88: viertes Farbwechslermodul von Farbwechsler
- 90: Auslasskanal
- 92: erste Lackversorgungsleitung
- 94: zweite Lackversorgungsleitung
- 96: dritte Lackversorgungsleitung
- 98: vierte Lackversorgungsleitung
- 100: Ausgangsleitung
- 102: Zuführungsleitung zum Zerstäuber
- 104: Zerstäuber

## Patentansprüche

1. Farbwechslermodul (10, 82, 84, 86, 88), umfassend einen Einlasskanal (12), einen Auslasskanal (14, 90), einen strömungstechnisch dazwischen angeordneten Durchlasskanal (16) und ein erstes Ventilmittel (18) zur Unterbrechung des Durchlasskanals (16), **dadurch gekennzeichnet,**
**dass** ein strömungstechnisch in Reihe mit dem ersten Ventilmittel (18) liegendes Andockventil (20 + 22; 60, 62, 64) vorgesehen ist, mit welchem der Durchlasskanal (16) ebenfalls unterbrechbar ist.

2. Farbwechslermodul nach Anspruch 1, **dadurch gekennzeichnet, dass** das Andockventil (20 + 22; 60, 62, 64) einen ersten (20) den Einlasskanal (12) umfassenden Ventilteil und einen zweiten (22) Ventilteil aufweist, wobei wenigstens der erste Ventilteil (20) beweglich (24) ist, so dass durch eine jeweilige Kupplungsbewegung beide Ventilteile (20, 22) an jeweiligen Kupplungsflächen (26) hermetisch miteinander koppelbar oder komplett voneinander trennbar sind.

3. Farbwechslermodul nach Anspruch 2, **dadurch gekennzeichnet, dass** als Kupplungsbewegung eine Linearbewegung überwiegend senkrecht zu den jeweiligen Kupplungsflächen (26) vorgesehen ist.

4. Farbwechslermodul nach einem der Ansprüche 2 oder 3, **dadurch gekennzeichnet, dass** der erste bewegliche Ventilteil (20) dafür vorgesehen ist, daran eine strömungstechnisch in den Einlasskanal (12) mündende Lackversorgungsleitung (30, 92, 94, 96, 98) anzuschließen.

5. Farbwechslermodul nach Anspruch 4, **dadurch gekennzeichnet, dass** der erste bewegliche Ventilteil (20) dafür vorgesehen ist, daran eine in den Einlasskanal (12) mündende Rückführungsleitung (34) anzuschließen, so dass zumindest bei geschlossenem Andockventil (20 + 22; 60, 62, 64) ein Materialumlauf von der Lackversorgungsleitung (30, 92, 94, 96, 98) in die Rückführungsleitung (34) ermöglicht ist.

6. Farbwechslermodul nach einem der vorherigen Ansprüche, **dadurch gekennzeichnet, dass** ein zweites Ventilmittel (44) zur Einspeisung von Luft und/oder einem Reinigungsfluid in den Durchlasskanal (16) vorgesehen ist.

7. Farbwechslermodul nach einem der vorherigen Ansprüche, **dadurch gekennzeichnet, dass** dieses einen zentralen Rückführungskanal aufweist und dass ein drittes Ventilmittel (36) vorgesehen ist, den Durchlasskanal (16) mit dem zentralen Rückführungskanal zu verbinden.

8. Farbwechslermodul nach einem der vorherigen Ansprüche, **dadurch gekennzeichnet, dass** dieses scheibenähnlich ausgestaltet ist, wobei mehrere gleichartige oder zumindest ähnliche Farbwechslermodule (10, 82, 84, 86, 88) aneinander reihbar sind und wobei dann ein sich quer über die aneinandergereihten Farbwechslermodule (10, 82, 84, 86, 88) erstreckender durchgehender Auslasskanal (90) und gegebenenfalls ein durchgehender zentraler Rückführungskanal gebildet ist.

9. Farbwechsler (50), umfassend mehrere aneinander gereihte Farbwechslermodule (10, 82, 84, 86, 88) nach einem der Ansprüche 1 bis 8.

10. Farbwechsler nach Anspruch 9, **dadurch gekennzeichnet, dass** eine Verriegelung oder ein Verriegelungsmechanismus (40, 42, 54, 56, 58, 66, 68, 70, 78) vorgesehen ist, durch welche die jeweiligen Andockventile (20 + 22; 60, 62, 64) gegeneinander verriegelt sind.

11. Farbwechsler nach Anspruch 10, **dadurch gekennzeichnet, dass** die Verriegelung oder der Verriegelungsmechanismus mechanisch, mechanisch-pneumatisch, elektrisch und/oder durch eine Programmsteuerung realisiert sind.

12. Farbwechsler nach Anspruch 11, **dadurch gekennzeichnet, dass** der bewegliche erste Ventilteil (20) der jeweiligen Andockventile (20 + 22; 60, 62, 64) eine Vertiefung (38) aufweist, gegenüber welcher ein jeweiliger Verriegelungskanal (42, 54, 56) mündet und wobei ein jeweiliges Kontaktmittel (40, 66) vorgesehen ist, welches beim Öffnen des jeweiligen Andockventils (20 + 22; 60, 62, 64) aus der Vertiefung (38) in den jeweiligen Verriegelungskanal (42, 54, 56) gedrückt wird, so dass das freie Innenvolumen des jeweiligen Verriegelungskanals (42, 54, 56) um ein Schaltvolumen reduziert wird, wobei die jeweiligen Verriegelungskanäle (42, 54, 56) an ihrem jeweiligen anderen Ende in einen gemeinsamen sich über alle Farbwechselmodule erstreckenden geschlossenen zentralen Verriegelungskanal (58) erstrecken.

13. Farbwechsler nach Anspruch 12, **dadurch gekennzeichnet, dass** die geschlossenen und miteinander verbundenen Verriegelungskanäle (42, 54, 56, 58) mit einem druckbelastbaren Medium gefüllt sind, welches alle Verriegelungskanäle (42, 54, 56, 58) bei geschlossenen Andockventilen (20 + 22; 60, 62, 64) abzüglich genau eines Schaltvolumens ausfüllt.

14. Farbwechsler nach Anspruch 13, **dadurch gekennzeichnet, dass** das druckbelastbare Medium zumindest teilweise durch Kugeln (40, 66, 68, 70) gebildet ist, welche vorzugsweise in ihrem Durchmesser auf den Durchmesser der Verriegelungskanäle (42, 54, 56, 58) angepasst sind.

15. Farbwechsler nach einem der Ansprüche 13 oder 14, **dadurch gekennzeichnet, dass** das druckbelastbare Medium zumindest teilweise durch eine Hydraulikflüssigkeit gebildet ist.

16. Farbwechsler nach einem der Ansprüche 13 bis 15, **dadurch gekennzeichnet, dass** das druckbelastbare Medium zumindest teilweise durch einen Stab gebildet ist.

17. Farbwechsler nach einem der Ansprüche 9 bis 16, **dadurch gekennzeichnet, dass** die Farbwechslermodule (10, 82, 84, 86, 88) in einem modulübergreifenden Gehäusekörper (52) angeordnet sind.

## Claims

1. Colour change module (10, 82, 84, 86, 88), comprising an inlet channel (12), an outlet channel (14, 90), a through channel (16) arranged in a fluidic connection between them, and a first valve means (18) for interrupting the through channel (16), **characterized in that** a docking valve (20 + 22; 60, 62, 64), with which the through channel (16) can likewise be interrupted, is arranged in a fluidic connection in series with the first valve means (18).

2. Colour change module according to Claim 1, **characterized in that** the docking valve (20 + 22; 60, 62, 64) has a first (20) valve part comprising the inlet channel (12), and a second (22) valve part, at least the first valve part (20) being movable (24), so that, by means of a respective coupling movement, the two valve parts (20, 22) can be coupled hermetically to each other or completely separated from each other at respective coupling faces (26).

3. Colour change module according to Claim 2, **characterized in that** the coupling movement provided is a linear movement substantially at right angles to the respective coupling faces (26).

4. Colour change module according to either of Claims 2 and 3, **characterized in that** the first movable valve part (20) is provided for the purpose of connecting thereto a paint supply line (30, 92, 94, 96, 98) that opens into the inlet channel (12) via a fluidic connection.

5. Colour change module according to Claim 4, **characterized in that** the first movable valve part (20) is provided for the purpose of connecting thereto a return line (34) opening into the inlet channel (12), so that, at least when the docking valve (20 + 22; 60, 62, 64) is closed, a circulation of material from the paint supply line (30, 92, 94, 96, 98) into the return line (34) is made possible.

6. Colour change module according to one of the preceding claims, **characterized in that** a second valve means (44) for feeding air and/or a cleaning fluid into the through channel (16) is provided.

7. Colour change module according to one of the preceding claims, **characterized in that** the said module has a central return channel, and **in that** a third valve means (36) is provided in order to connect the through channel (16) to the central return channel.

8. Colour change module according to one of the preceding claims, **characterized in that** the said module is configured in the manner of a disc, wherein a plurality of identical or at least similar colour change modules (10, 82, 84, 86, 88) can be lined up, in series with one another, and wherein a continuous outlet channel (90) extending transversely over the colour change modules (10, 82, 84, 86, 88) lined up in series and, if appropriate, a continuous central return channel is/are formed.

9. Colour changer (50), comprising a plurality of colour change modules (10, 82, 84, 86, 88) according to one of Claims 1 to 8 lined up in series with one another.

10. Colour changer according to Claim 9, **characterized in that** a lock or a locking mechanism (40, 42, 54, 56, 58, 66, 68, 70, 78), by means of which the respective docking valves (20 + 22; 60, 62, 64) can be locked against one another, is provided.

11. Colour changer according to Claim 10, **characterized in that** the lock or the locking mechanism is implemented mechanically, mechanically-pneumatically, electrically and/or by means of a sequential control system.

12. Colour changer according to Claim 11, **characterized in that** the movable first valve (20) of the respective docking valves (20 + 22; 60, 62, 64) has a first depression (38), opposite which a respective locking channel (42, 54, 56) opens, and **in that** a respective contact-making means (40, 66) is provided, which, as the respective docking valve (20 + 22; 60, 62, 64) is opened, is forced out of the depression (38) into the respective locking channel (42, 54, 56), so that the free internal volume of the respective locking channel (42, 54, 56) is reduced by a control volume, the respective other end of the respective locking channels (42, 54, 56) extending into a common, closed central locking channel (58) extending over all the colour change modules.

13. Colour changer according to Claim 12, **characterized in that** the locking channels (42, 54, 56, 58) closed and connected to one another are filled with a pressurizable medium which, when the docking valves (20 + 22; 60, 62, 64) are closed, fills all the locking channels (42, 54, 56, 58) minus exactly one control volume.

14. Colour changer according to Claim 13, **characterized in that** the pressurizable medium is at least partly formed by balls (40, 66, 68, 70), of which the diameter is preferably matched to the diameter of the locking channels (42, 54, 56, 58).

15. Colour changer according to either of Claims 13 and 14, **characterized in that** the pressurizable medium is at least partly formed by a hydraulic fluid.

16. Colour changer according to one of Claims 13 to 15, **characterized in that** the pressurizable medium is at least partly formed by a rod.

17. Colour changer according to one of Claims 9 to 16, **characterized in that** the colour change modules (10, 82, 84, 86, 88) are arranged in a modulespanning housing body (52).

## Revendications

1. Module de changement de teinte (10, 82, 84, 86, 88), comportant un canal d'entrée (12), un canal de sortie (14, 90), un canal de passage (16) disposé en liaison fluidique entre ceux-ci et un premier moyen de soupape (18) pour interrompre le canal de passage (16), **caractérisé en ce qu'**une soupape de connexion (20 + 22 ; 60, 62, 64) à l'aide de laquelle le canal de passage (16) peut également être interrompu est prévue, laquelle est disposée en liaison fluidique en série avec le premier moyen de soupape (18).

2. Module de changement de teinte selon la revendication 1, **caractérisé en ce que** la soupape de connexion (20 + 22 ; 60, 62, 64) comprend une première (20) partie de soupape comportant le canal d'entrée (12) et une deuxième (22) partie de soupape, au moins la première partie de soupape (20) étant mobile (24), de telle sorte que, par un mouvement d'accouplement respectif, les deux parties de soupape (20, 22) puissent être accouplées hermétiquement l'une à l'autre ou séparées complètement l'une de l'autre au niveau de surfaces d'accouplement (26) respectives.

3. Module de changement de teinte selon la revendication 2, **caractérisé en ce qu'**il est prévu en tant que mouvement d'accouplement un mouvement linéaire essentiellement perpendiculaire aux surfaces d'accouplement (26) respectives.

4. Module de changement de teinte selon l'une quelconque des revendications 2 et 3, **caractérisé en ce que** la première partie de soupape (20) mobile est prévue pour y raccorder une conduite d'alimentation en peinture (30, 92, 94, 96, 98) débouchant dans le canal d'entrée (12) par une liaison fluidique.

5. Module de changement de teinte selon la revendication 4, **caractérisé en ce que** la première partie de soupape (20) mobile est prévue pour y raccorder une conduite de retour (34) débouchant dans le canal d'entrée (12), de telle sorte qu'au moins lorsque la soupape de connexion (20 + 22 ; 60, 62, 64) est fermée, une circulation de matériau à partir de la conduite d'alimentation en peinture (30, 92, 94, 96, 98) jusqu'à la conduite de retour (34) soit rendue possible.

6. Module de changement de teinte selon l'une quelconque des revendications précédentes, **caractérisé en ce qu'**il est prévu un deuxième moyen de soupape (44) pour introduire de l'air et/ou un fluide de nettoyage dans le canal de passage (16).

7. Module de changement de teinte selon l'une quelconque des revendications précédentes, **caractérisé en ce que** celui-ci comprend un canal de retour central et **en ce qu'**il est prévu un troisième moyen de soupape (36) pour relier le canal de passage (16) au canal de retour central.

8. Module de changement de teinte selon l'une quelconque des revendications précédentes, **caractérisé en ce que** celui-ci est configuré à la manière d'un disque, plusieurs modules de changement de teinte (10, 82, 84, 86, 88) identiques ou au moins similaires pouvant être juxtaposés puis un canal de sortie (90) traversant s'étendant transversalement sur les modules de changement de teinte (10, 82, 84, 86, 88) juxtaposés et éventuellement un canal de retour central traversant étant formés.

9. Changeur de teintes (50), comportant plusieurs modules de changement de teinte (10, 82, 84, 86, 88) juxtaposés selon l'une quelconque des revendications 1 à 8.

10. Changeur de teinte selon la revendication 9, **caractérisé en ce qu'**un verrouillage ou un mécanisme de verrouillage (40, 42, 54, 56, 58, 66, 68, 70, 78) est prévu, au moyen desquels les soupapes de connexion (20 + 22 ; 60, 62, 64) respectives sont verrouillées les unes par rapport aux autres.

11. Changeur de teinte selon la revendication 10, **caractérisé en ce que** le verrouillage ou le mécanisme de verrouillage sont réalisés de manière mécanique, mécano-pneumatique, électrique et/ou au moyen d'une commande à programme.

12. Changeur de teinte selon la revendication 11, **caractérisé en ce que** la première partie de soupape (20) mobile des soupapes de connexion (20 + 22 ; 60, 62, 64) respectives comprend un évidement (38) en régard duquel débouche un canal de verrouillage (42, 54, 56) respectif et un moyen de contact (40, 66) respectif étant prévu, lequel, lors de l'ouverture de la soupape de connexion (20 + 22 ; 60, 62, 64) respective, est poussé hors de l'évidement (38) jusque dans le canal de verrouillage (42, 54, 56) respectif, de telle sorte que le volume interne libre du canal de verrouillage (42, 54, 56) respectif soit réduit d'un volume de commutation, les canaux de verrouillage (42, 54, 56) respectifs s'étendant, à leur autre extrémité respective, dans un canal de verrouillage (58) central fermé s'étendant sur tous les modules de changement de teinte.

13. Changeur de teinte selon la revendication 12, **caractérisé en ce que** les canaux de verrouillage (42, 54, 56, 58) fermés et reliés les uns aux autres sont remplis d'un milieu pouvant être sollicité en pression, lequel milieu, lorsque les soupapes de connexion (20 + 22 ; 60, 62, 64) sont fermées, remplit tous les canaux de verrouillage (42, 54, 56, 58) moins exactement un volume de commutation.

14. Changeur de teinte selon la revendication 13, **caractérisé en ce que** le milieu pouvant être sollicité en pression est formé au moins partiellement par des billes (40, 66, 68, 70) dont le diamètre est de préférence adapté au diamètre des canaux de verrouillage (42, 54, 56, 58).

15. Changeur de teinte selon l'une quelconque des revendications 13 et 14, **caractérisé en ce que** le milieu pouvant être sollicité en pression est formée au moins partiellement par un fluide hydraulique.

16. Changeur de teinte selon l'une quelconque des revendications 13 à 15, **caractérisé en ce que** le milieu pouvant être sollicité en pression est formé au moins partiellement par une tige.

17. Changeur de teinte selon l'une quelconque des revendications 9 à 16, **caractérisé en ce que** les modules de changement de teinte (10, 82, 84, 86, 88) sont disposés dans un corps de boîtier (52) chevauchant les modules.
